# EUROPÄISCHE PATENTANMELDUNG

(11) **EP 0 834 829 A1**
(43) Veröffentlichungstag der Anmeldung: **08.04.1998**
(21) Anmeldenummer: 96810667.4
(22) Anmeldetag: 04.10.1996
(51) Int. Cl.: G06K 17/00

(54) **Elektronische Archivierungsvorrichtung**

(71) Anmelder: Biella-Neher AG, 2555 Brügg (CH)
(72) Erfinder: Krebs, Roger, 2556 Schwadernau (CH); Ramseier, Hans, 3250 Lyss (CH); Pauli, Gerhard, 3098 Köniz (CH); Jacomet, Marcel, Dr., 2543 Lengnau (CH)
(74) Vertreter: BOVARD AG - Patentanwälte

(57) **Zusammenfassung**

Die Erfindung löst die Aufgabe, ein Archiv zu schaffen, bei dem Gegenstände wieder gefunden werden können, die durch eine Person an einem beliebigen freien Lagerplatz abgelegt wurden. Dazu sind die archivierten Gegenstände, zum Beispiel Aktenmappen (8) oder Bücher, mit kontaktlose elektronischen Identifikationsvorrichtungen versehen. Kommunikationsmittel zum Informationsaustausch mit den Identifikationsvorrichtungen sind mit einem zentralen Rechner (1) verbunden.

## Beschreibung

Die Erfindung betrifft eine Archivierungsvorrichtung mit mindestens einer Ablage zu Aufnahme Von Gegenständen.

Die Anmelderin hat ein Suchsystem für ein Aktenarchiv entwickelt und auf den Markt gebracht, bei dem einzelne Akten in speziell gekennzeichnete Kartonmappen abgelegt werden. Mehrere solcher Mappen können gemeinsam in Kunststoffbehältern archiviert werden, welche in dafür konstruierten Regalen aufzureihen sind. Die einzelnen Mappen sind mit einer einmaligen Nummer versehen, welche unterstützt durch einen gut sichtbaren Farbcode auf der Mappe aufgebracht werden. Mit diesem Prinzip lassen sich grosse Archive auf kompaktem Raum installieren. Durch die gut sichtbaren Farbcodes können geübte Archivare sehr rasch einzelne Akten ausfindig machen. Falsch eingeordnete Mappen fallen aufgrund des Farbcodes sofort auf. Es ist ein Nachteil dieses Systems, dass die Mappen zwingend in Reihenfolge der Codierung eingeordnet sein müssen, damit sie wiedergefunden werden können. Wächst ein einzelner Bereich des Archivs über das geplante Mass hinaus, werden Umplazierungen und/oder Neucodierungen von Mappen notwendig. Umplazierungen werden beispielsweise bei einem alphabetisch geordneten Archiv dann nötig, wenn der für einen Buchstaben vorgesehene Platz erschöpft ist. Solche Arbeiten können insbesondere bei grossen Archiven einen erheblichen Umfang annehmen.

Es sind auch Lagersysteme bekannt, bei denen die Waren chaotisch eingelagert werden. Das bedeutet, dass ein Computer jedem einzulagernden Gegenstand einen freien Platz im Lager zuweist und die Koordinaten dieses Platzes speichert. Derartige Systeme beinhalten in der Regel eine Transporteinrichtung, welche den Gegenstand an den ihm zugewiesenen Platz bringt und bei Bedarf wieder holt. Es ist bei diesen Systemen nicht möglich, einen Gegenstand wieder zu finden, der durch eine Person an einem beliebigen freien Lagerplatz deponiert wurde ohne dies dem Computer mitzuteilen.

Unter der Nummer WO95/04324 wurde eine Patentanmeldung veröffentlicht, welche ein Aufbewahrungssystem für Objekte mit elektronischer Identifikation zum Gegenstand hat. Das System lagert Objekte, die mit einer Identifikationsvorrichtung verbunden sind, in Lagerplätzen. Jede Identifikationsvorrichtung enthält einen elektronischen Speicher mit einem einmaligen Code. Das Aufbewahrungssystem erhält Informationen sowohl über den Code jeder Identifikationsvorrichtung als auch über das damit verbundene Objekt. Ein Benutzer gibt Informationen über ein bestimmtes Objekt ein und das System identifiziert den Lagerplatz, welcher die Identifikationsvorrichtung enthält und zeigt ihn dem Benutzer an. Das Aufbewahrungssystem wird beispielsweise bei Autohändlern, Hotels oder Spitälern zum Aufbewahren und Wiederfinden von Schlüsseln an zufälligen Lagerplätzen verwendet und erschwert den unbefugten Zugriff. Es ist ein Nachteil dieses Systems, dass die Lagerplätze identisch sind und somit nicht Gegenstände mit stark unterschiedlichen Abmessungen in einem einzigen Archivierungssystem untergebracht werden können. Ein weiterer Nachteil besteht darin, dass jede der verwendeten Identifikationsvorrichtungen zur Aufrechterhaltung der gespeicherten Informationen eine Batterie benötigt. Ein dritter Nachteil dieser Lösung besteht darin, dass zur Abfrage der gespeicherten Informationen ein elektrischer Kontakt mit der jeweiligen Identifikationsvorrichtung bestehen muss.

Eine Aufgabe der vorliegenden Erfindung besteht darin, ein Archiv zu schaffen, bei dem die archivierten Gegenstände nicht in Reihenfolge einer Codierung eingeordnet sein müssen, damit sie wiedergefunden werden können. Eine weitere Aufgabe der vorliegenden Erfindung besteht darin, ein Archiv zu schaffen, das in der Lage ist, Gegenstände wiederzufinden, die durch eine Person an einem beliebigen freien Lagerplatz abgelegt wurden. Eine weitere Aufgabe der vorliegenden Erfindung besteht darin, ein Archiv zu schaffen, das unabhängig von den Abmessungen der archivierten Gegenstände ist, so dass Gegenstände mit stark unterschiedlichen Abmessungen in einem einzigen Archivierungssystem untergebracht werden können. Ferner ist es eine Aufgabe der Erfindung, ein Archiv vorzuschlagen, bei dem der Informationsaustausch zwischen den Identifikationsvorrichtungen und den Kommunikationsmitteln kontaktlos erfolgt.

Zur Lösung dieser Aufgabe ist die Archivierungsvorrichtung der eingangs genannten Art gekennzeichnet durch kontaktlose elektronische Identifikationsvorrichtungen, mit denen jeder Gegenstand verbunden ist und durch mit einem zentralen Rechner verbundene Kommunikationsmittel zum Informationsaustausch mit den Identifikationsvorrichtungen.

Diese Lösung hat gegenüber dem bekannten Stand der Technik folgende Vorteile. Die Funktion der Vorrichtung ist völlig unabhängig von der Grösse der Lagerplätze, welche die zu archivierenden Gegenstände beanspruchen. Die Gegenstände können jederzeit manuell an einem beliebigen freien Platz abgelegt werden. Mit anderen Worten ist es bei der erfindungsgemässen Vorrichtung gar nicht möglich, einen Gegenstand falsch abzulegen; ist ein mit einer Identifikationsvorrichtung verbundener Gegenstand im Archiv, kann er auch gefunden werden. Demzufolge kann sogar auf eine optische Kennzeichnung der Gegenstände, zum Beispiel durch Nummern oder Farben, verzichtet werden. Ein derartiges Archiv kann jederzeit erweitert werden, ohne dass dazu aufwendige Neucodierungen oder Umplazierungen von Gegenständen notwendig sind. Eine Inventarisierung des gesamten Inhalts des Archivs kann durch den zentralen Rechner, beispielsweise automatisch über Nacht, durchgeführt werden. Ferner lassen sich alle im Hauptrechner gespeicherten Daten über die archivierten Gegenstände in bekannter Art und Weise sichern. Das Einlagern und die Entnahme von Gegenständen kann vom System quittiert werden. Falls irrtümlich ein anderer als der gesuchte Gegenstand entnommen wird, kann auch dies signalisiert werden.

Wenn gemäss Anspruch 2 mindestens eine lokale Suchelektronik eingesetzt wird, kann "Intelligenz'' vom Zentralrechner weg verlagert und so die Arbeitsweise der Archivierungsvorrichtung beschleunigt werden. Indem gemäss Anspruch 3 Mittel zum Begrenzen des Wirkungsbereichs jedes Kommunikationsmittels auf eine Anzahl Gegenstände vorgesehen sind, werden Suchvorgänge beschleunigt und vereinfacht und die Gefahr von Kollisionen der Identifikationssignale wird verringert, wodurch insgesamt die Betriebssicherheit der Archivierungsvorrichtung steigt. Nach der Ausführungsart des Anspruchs 4 umfassen die Kommunikationsmittel Antennen und die Mittel zum Begrenzen des Wirkungsbereichs sind Abschirmungen. Eine solche Ausgestaltung der Erfindung ist sehr leicht und kostengünstig zu realisieren. Ein ganz wesentlicher Vorteil lässt sich erzielen, wenn die kontaktlosen elektronischen Identifikationsvorrichtungen, wie im Anspruch 5 angegeben, mit Spulen verbunden sind, denn dadurch kann auf Batterien zur Speisung der kontaktlosen elektronischen Identifikationsvorrichtungen verzichtet werden. Dies erhöht nicht nur die Betriebssicherheit, sondern ist auch unter ökologischen Gesichtspunkten von Bedeutung. Der Standort eines gefundenen Gegenstandes kann prinzipiell auf einer Anzeige beim Zentralrechner gemeldet werden. Es ist aber von Vorteil, wenn Anzeigevorrichtungen gemäss Anspruch 6 plaziert werden, wodurch die Position eines gefundenen Gegenstandes direkt angezeigt werden kann. Besonders bei Archivierungsvorrichtungen, in denen sich viele Gegenstände im Einflussbereich einer Antenne befinden, ist es sinnvoll, wie im Anspruch 7 angegeben, die Gegenstände zusätzlich mit optischen Identifikationsmerkmalen zu versehen und Anzeigevorrichtungen vorzusehen, welche in der Lage sind diese die Identifikationsmerkmale darzustellen. Nach Anspruch 8 sind die Gegenstände Mappen, welche zur Aufnahme von Dokumenten oder Kleinteilen dienen. Derartige Mappen mit weiter hinten näher bezeichneten Identifikationsvorrichtungen lassen sich als Massengut produzieren, wodurch sich die beschriebene Archivierungsvorrichtung besonders als Aktenarchiv eignet. Die im Anspruch 9 umschriebene Ausführungsart erleichtert ein schnelles Auffinden von Mappen und lässt sich durch entsprechendes Ausrüsten der eingangs erwähnten Behälter realisieren. Eine nach Anspruch 10 gestaltete Archivierungsvorrichtung lässt sich besonders einfach ausbauen.

Ausführungsbeispiele der Erfindung werden im folgenden unter Bezugnahme auf die beiliegenden Zeichnungen näher beschrieben. Es zeigen
Figur 1 eine Schematische Darstellung eines gemäss den Prinzipien der vorliegenden Erfindung aufgebauten Archivs für Akten
Figur 2 einen Behälter zur Aufnahme von Mappen und
Figur 3 eine Mappe mit Identifikationsvorrichtung.

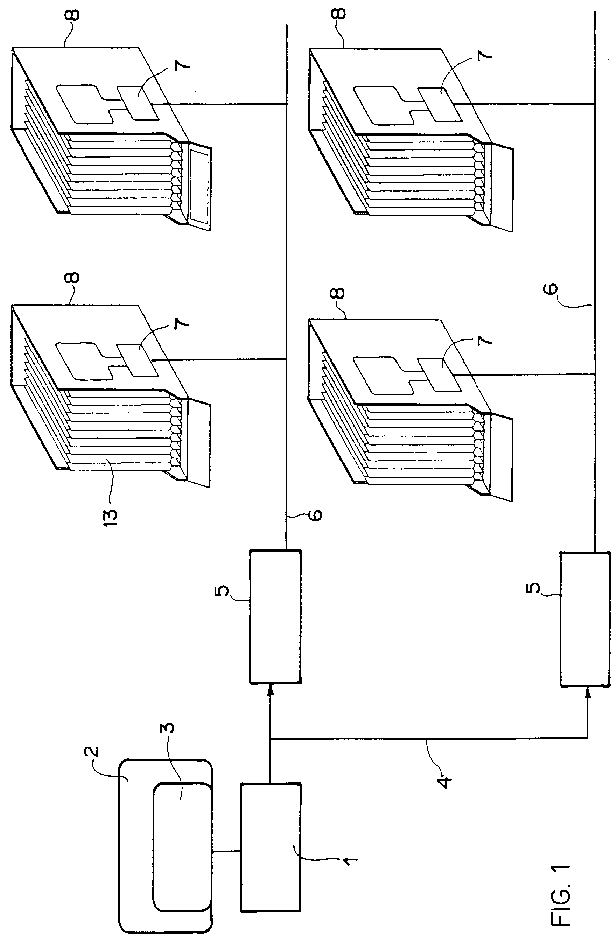

Das im folgenden beschriebene Ausführungsbeispiel der Erfindung basiert auf dem eingangs geschilderten Archiv für Akten. Ein solches Archiv kann sich über mehrere Räume eines Gebäudes erstrecken und ist im wesentlichen wie folgt aufgebaut. Die archivierten Akten sind in Mappen abgelegt, von denen je etwa zehn Stück in einem Behälter, beispielsweise aus Kunststoff, untergebracht sind. Eine Anzahl solcher Behälter ist jeweils auf einem Gestell gelagert, welches seinerseits in mehrere Ebenen unterteilt ist. In Figur 1 sind nur diejenigen Elemente dargestellt, die für die Beschreibung dieses Ausführungsbeispiels von Bedeutung sind. Ein Zentralrechner 1, auf dem Anwendungssoftware 2 und Suchsoftware 3 geladen ist, steht über einen globalen Bus 4 mit je einer lokalen Suchelektronik 5 in Verbindung, die beispielsweise in jedem Gestell vorhanden ist. Die lokale Suchelektronik kann mit jedem einzelnen Behälter kommunizieren, selbständig Suchbefehle ausführen oder sämtliche Mappen-Identifikationen abfragen und die Resultate dem Zentralrechner mitteilen. Jeder Behälter 8 ist mit einer Behälterelektronik 7 ausgestattet und über einen lokalen Bus 6 mit der lokalen Suchelektronik 5 verbunden. Die Behälterelektronik beinhaltet einen ASIC für die lokale Steuerung und einen Transceiver für die Kommunikation mit den einzelnen Mappen.

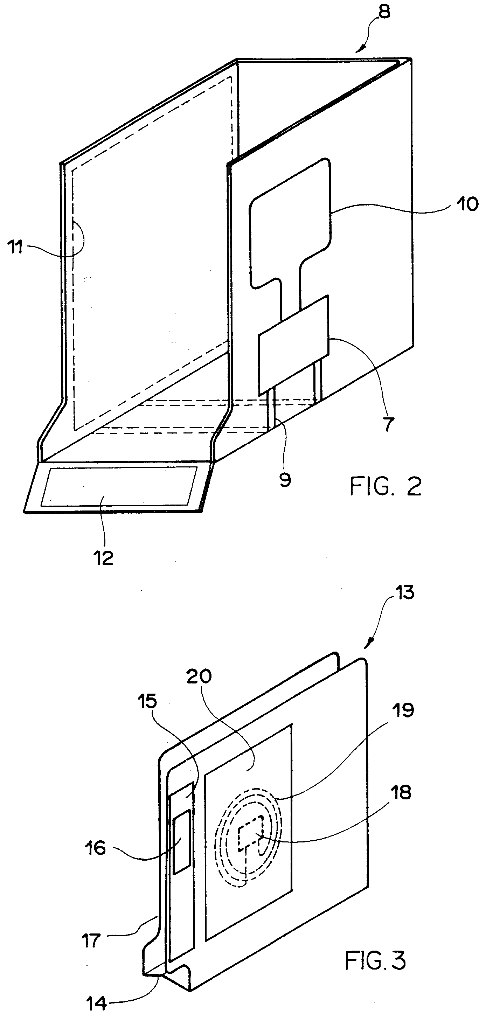

Ein solcher Behälter 8 ist in Figur 2 näher dargestellt. Es ist ein auf zwei Seiten offener Kunststoffbehälter, der etwa zehn Mappen der später unter Bezugnahme auf Figur 3 beschriebenen Art aufzunehmen vermag. In der auf der Zeichnung rechten Seitenwand des Behälters 8 ist die Behälterelektronik 7 eingelassen, welche auf ihrer oberen Seite mit einer Antenne 10 und auf der unteren Seite mit Kontakten 9 verbunden ist. Die Antenne, welche aus einer auf die Behälterwand aufgeklebten flachen Schleife bestehen kann, hat zwei Aufgaben. Sie erzeugt ein elektromagnetisches Feld, aus welchem die sich im Behälter befindenden Identifikationsvorrichtungen die Energie zu ihrem Betrieb beziehen und sie empfängt die von den Identifikationsvorrichtungen ausgesandten Signale und leitet diese an die Behälterelektronik 7 weiter. Die Kontakte 9 haben ebenfalls zwei Aufgaben. Sie dienen der Speisung der Behälterelektronik mit elektrischer Energie und gleichzeitig der Signalübertragung zwischen der lokalen Suchelektronik und der Behälterelektronik. Die Kontakte sind über die untere Kante des Behälters herum auf dessen Boden geführt, wo sie mit am Gestell angebrachten, nicht dargestellten Kontaktschienen in Berührung kommen, sobald der Behälter im Gestell deponiert wird. Diese Kontaktschienen stellen gleichzeitig Speiseleitungen und den lokalen Bus dar. Damit das von der Antenne erzeugte Feld nur auf die im Behälter vorhandenen Identifikationsvorrichtungen wirkt und die von letzteren ausgesandten Signale nur von der Antenne des zugehörigen Behälters empfangen werden können, weist jeder Behälter an der der Antenne 10 gegenüberliegenden Seitenwand eine Abschirmung 11 auf. Zur eindeutigen Kennzeichnung einer gefundenen Mappe hat der Behälter noch eine Anzeigevorrichtung 12, die über nicht dargestellte Leitungen mit der Behälterelektronik verbunden ist.

Figur 3 zeigt eine schematische, perspektivische Darstellung einer in einem erfindungsgemässen Archiv zu verwendenden Mappe 13 in derjenigen Lage, in der sie in einem Behälter 8 abgelegt wird. Die Mappe kann aus Karton bestehen und einen W-förmig gefalteten Boden 14 aufweisen, um eine grössere Anzahl von Dokumenten, aber auch andere Objekte aufnehmen zu können. An der einen, dem Betrachter zugewandten Vorderkante weist die Mappe eine aufgeklebte Etikette mit einer optischen Kennzeichnung 16 auf, die aus Zahlen, Buchstaben, Symbolen, Farben oder einer Kombination davon bestehen kann. Die Kennzeichnung 16 kann auch auf andere Weise als durch eine Etikette auf der Mappe angebracht sein, beispielsweise durch Drucken oder Stempeln, oder es können verschieden farbige Mappen verwendet werden. Es ist aber zu betonen, dass eine optische Kennzeichnung der Mappen nicht zwingend erforderlich ist. Bei dem hier beschriebenen Beispiel ist es aber zweckmässig, wenn so viele verschiedene Kennzeichnungen verwendet werden, wie Mappen in einem Behälter Platz haben, also etwa zehn. Wenn beim Einlagern der Mappen darauf geachtet wird, dass in einem Behälter jeweils nur eine Mappe mit gleicher optischer Kennzeichnung abgelegt wird, erleichtert dies später die Entnahme einer gesuchten Mappe. Die andere dem Betrachter zugewandte Vorderkante der Mappe 13 weist eine Ausnehmung 17 auf, damit die gegebenenfalls um die Vorderkante herum gefaltete oder auf beiden Seiten vorhandene optische Kennzeichnung von beiden Seiten gut erkennbar ist.

Eine kontaktlose elektronische Identifikationsvorrichtung 18 in Form eines in Prozesstechnologie gefertigten Transponderchips ist auf der einen Seitenfläche der Mappe befestigt. Sie können auch an einer Kante oder im Boden 14 fixiert sein. Derartige Vorrichtungen sind beispielsweise unter der Bezeichnung "contactless identification device", hergestellt von der Firma EM in Marin (CH) oder "Hitag ™", hergestellt von der Firma Mikron GmbH in Gratkorn (AT) im Handel erhältlich. Die letztgenannte Vorrichtung besitzt eine Antikollisionsfunktion, das heisst die Fähigkeit, mehrere Vorrichtungen gleichzeitig im Feld einer Antenne zu betreiben. Jede Identifikationsvorrichtung enthält einen elektronischen Speicher mit einem einmaligen Code sowie Mittel zum Senden dieses Codes. Benachbart zur Identifikationsvorrichtung 18 befindet sich eine Spule 19, welche die zum Betrieb der Vorrichtung 18 benötigte Energie aus dem durch die Antenne 10 des Behälters 8 erzeugten Feld entnimmt. Gleichzeitig kann die Spule 19 als Antenne zum Senden des Identifikationscodes der Vorrichtung 18 dienen.

Im folgenden werden Varianten der Betriebsweise des oben beschriebenen Aktenarchivs beschrieben.

Das Archivieren einer Mappe wird gemäss einer Variante durch den Archivar eingeleitet, indem er die Vorrichtung durch ein Kommando auf das bevorstehende Ablegen einer Mappe vorbereitet, welches Kommando bewirkt, dass die Sendefunktion der Behälterelektronik entweder nur des für das Archivieren der Mappe bestimmten Behälters, aller Behälter eines bestimmten Gestells oder aller Behälter des Archivs aktiviert wird. Das Kommando wird beispielsweise mittels einer dafür vorgesehenen Taste bei der Behälterelektronik, bei der lokalen Suchelektronik oder beim Zentralrechner eingegeben. Nach einer anderen Variante ist die Sendefunktion jeder Behälterelektronik dauernd aktiv, wodurch auf ein spezielles Kommando vor dem Archivieren verzichtet werden kann. Sobald die zu archivierende Mappe in den Wirkungsbereich einer Antenne 10 gelangt, sendet die Identifikationsvorrichtung 18 ihren individuellen Code, welcher von der betreffenden Behälterelektronik erfasst und via lokale Suchelektronik an den Zentralrechner übermittelt wird.

Beim Suchen eines bestimmten Dokumentes ermittelt der Zentralrechner zuerst in der Datenbank den Code der Mappe, die das Dokument enthält. Für den weiteren Verlauf sind zwei verschiedene Fälle denkbar. Im Normalfall hat der Zentralrechner beim Archivieren der Mappe deren Position gespeichert, so dass es genügt, letztere zu verifizieren und bei positivem Ergebnis die Position dem Archivar mitzuteilen. Dazu sendet der Zentralrechner 1 den Identifikationscode der Mappe 13 über den globalen Bus 4 an die betreffende lokale Suchelektronik 5, welche sogleich die Behälterelektronik 7 des Behälters 8 aktiviert, von welchem erwartet wird, dass sich die Mappe darin befindet. Die betreffende Behälterelektronik 7 veranlasst, dass die im Behälter eingebaute Antenne 10 ein Feld aufbaut, wodurch die Identifikationsvorrichtungen 18 der sich im Behälter befindenden Mappen aktiviert werden und ihren Code senden. Die von den Identifikationsvorrichtungen ausgesandten Signale werden von der Antenne 10 empfangen und in der Behälterelektronik 7 ausgewertet. Befindet sich der Code der gesuchten Mappe wie erwartet unter diesen Signalen, steuert die Behälterelektronik die Anzeigevorrichtung 12 des Behälters an, so dass dort ein den Archivar auf den Behälter aufmerksam machendes Signal und vorzugsweise zusätzlich eine optische Kennung, das heisst die Nummer und/oder der Farbcode der gesuchten Mappe abgelesen werden kann. Die Behälterelektronik bestätigt der lokalen Suchelektronik 5, dass der betreffende Behälter 8 die gesuchte Mappe enthält und die lokale Suchelektronik gibt diese Meldung an den Zentralrechner 1 weiter, wobei sie gegebenenfalls gleichzeitig eine am Gestell vorgesehene Anzeigevorrichtung in Betrieb setzen kann. Der Standort des die Mappe enthaltenden Behälters wird dem Archivar mitgeteilt, beispielsweise durch einen Bildschirm oder bei grossen Archiven durch ein Handgerät. Die Angaben können hierarchisch gegliedert sein, etwa nach Raum, Reihe, Gestell, Ebene, Behälter. Der Archivar begibt sich zum entsprechenden Behälter und sucht unter den in diesem enthaltenen Mappen diejenige, welche die auf der Anzeigevorrichtung sichtbare Nummer bzw. den Farbcode aufweist. Falls ohne optische Kennung der Mappen gearbeitet wird oder sich zufälligerweise zwei Mappen mit gleicher optischer Kennung in dem Behälter befinden, muss er durch Probieren die richtige Mappe ermitteln. Da die Behälterelektronik immer noch aktiv ist, wird jedes Entnehmen einer Mappe sofort detektiert und es kann durch ein optisches oder akustisches Signal gemeldet werden, ob die richtige oder eine falsche Mappe herausgezogen wurde.

Der zweite Fall tritt dann ein, wenn sich die gesuchte Mappe nicht an dem im Rechner gespeicherten Platz befindet. Dieser Fall kann beispielsweise dann eintreten, wenn die Mappe in einem Moment abgelegt wurde, in welchem die betreffende Behälterelektronik aus irgend einem Grund nicht aktiv war. In dieser Situation wird der Zentralrechner einen Suchvorgang auslösen, bei dem der Zentralrechner 1 den Identifikationscode der gesuchten Mappe 13 über den globalen Bus 4 an jede lokale Suchelektronik 5 sendet und letztere die Behälterelektronik 7 jedes Behälters 8 aktivieren. Das Aktivieren jeder lokalen Suchelektronik und jeder Behälterelektronik kann gleichzeitig geschehen. Die Vorgänge nach dem Auffinden der Mappe sind dieselben, wie beim oben geschilderten Normalfall. Das hier als Suchvorgang beschriebene Vorgehen kann auch angewendet werden, um ein Gesamt- oder Teilinventar oder eine Funktionsprobe durchzuführen. Bei einer Funktionsprüfung kann unter anderem auch geprüft werden, ob alle Behälter ordnungsgemäss mit den Kontaktschienen zusammenarbeiten. Dies ist deshalb möglich, weil jede einzelne Behälterelektronik individuell adressierbar ist und der Zentralrechner die Position jedes Behälters gespeichert hat. Falls eine Behälterelektronik nicht anspricht, wird der Rechner eine Störungsmeldung zusammen mit der gespeicherten Position der betreffenden Behälters ausgeben. Die Funktionsprüfung kann auch gleichzeitig mit einem Suchvorgang ausgeführt werden.

Bei besonders grossen Archiven mit mehreren Archivaren ist es möglich, dass dem einzelnen Archivar mehreren Aktensuchaufträge gleichzeitig mitgeteilt werden. Dies kann über ein Handgerät erfolgen, welches ständig den aktuellen Standort des Archivars an den Hauptrechner meldet. So ist es auch möglich, jeden Suchauftrag demjenigen Archivar mitzuteilen, der sich gerade am nächsten bei der gesuchten Mappe befindet.

In einem anderen, in den Zeichnungen nicht dargestellten Ausführungsbeispiel der Erfindung kann auf die Behälterelektronik verzichtet werden. Statt dessen sind die Antennen, die Abschirmungen und die Anzeigevorrichtungen im Gestell eingebaut, beispielsweise je eine pro Meter auf jeder Ebene. In diesem Fall übernimmt die lokale Suchelektronik die oben beschriebene Funktion der Behälterelektronik.

Die Erfindung ist nicht auf die oben beschriebenen Ausführungsbeispiele beschränkt, sondern kann auch auf anderen Gebieten verwendet werden. So kann beispielsweise ein Lager, insbesondere für Kleinteile, gemäss der Erfindung ausgebildet sein, wobei die Gegenstände Behälter sind, welche die Kleinteile aufnehmen. Auch eine Bibliothek könnte gemäss der Erfindung aufgebaut sein, wobei jedes Buch mit einer kontaktlosen Identifikationsvorrichtung ausgerüstet wäre.

## Patentansprüche

1. Archivierungsvorrichtung mit mindestens einer Ablage zur Aufnahme von Gegenständen (13), gekennzeichnet durch kontaktlose elektronische Identifikationsvorrichtungen (18), mit denen jeder Gegenstand verbunden ist und durch mit einem zentralen Rechner (1) verbundene Kommunikationsmittel (10) zum Informationsaustausch mit den Identifikationsvorrichtungen.

2. Archivierungsvorrichtung nach Anspruch 1, gekennzeichnet durch mindestens eine lokale Suchelektronik (5), die zwischen dem zentralen Rechner (1) und mindestens einem Kommunikationsmittel (10) angeordnet ist.

3. Archivierungsvorrichtung nach Anspruch 1 oder 2, dadurch gekennzeichnet, dass Mittel (11) zum Begrenzen des Wirkungsbereichs jedes Kommunikationsmittels (10) auf eine Anzahl Gegenstände vorgesehen sind.

4. Archivierungsvorrichtung nach Anspruch 3, dadurch gekennzeichnet, dass die Kommunikationsmittel Antennen (10) umfassen und die Mittel zum Begrenzen des Wirkungsbereichs Abschirmungen (11) sind.

5. Archivierungsvorrichtung nach Anspruch 4, dadurch gekennzeichnet, dass die kontaktlosen elektronischen Identifikationsvorrichtungen (18) mit Spulen (19) verbunden sind, welche die zum Betrieb der Identifikationsvorrichtung benötigte Energie aus dem von der Antenne erzeugten Feld entnehmen.

6. Archivierungsvorrichtung nach Anspruch 4 oder 5, dadurch gekennzeichnet, dass in der Nähe der Antennen (10) Anzeigevorrichtungen (12) zum Anzeigen der Position eines gesuchten, aus der Archivierungsvorrichtung zu entnehmenden Gegenstands (13) angeordnet sind.

7. Archivierungsvorrichtung nach Anspruch 6, dadurch gekennzeichnet, dass die Gegenstände (13) zusätzlich mit optischen Identifikationsmerkmalen ausgerüstet sind und die Anzeigevorrichtungen (12) so ausgebildet sind, dass sie die Identifikationsmerkmale darstellen können.

8. Archivierungsvorrichtung nach einem der Ansprüche 1 bis 7, dadurch gekennzeichnet, dass die Gegenstände (13) zur Aufnahme von Dokumenten oder Kleinteilen bestimmte Mappen sind.

9. Archivierungsvorrichtung nach Anspruch 8, dadurch gekennzeichnet, dass jeweils eine Anzahl Mappen, beispielsweise zehn Stück, in einem Behälter (8) untergebracht sind, wobei jeder Behälter Kommunikationsmittel (10), eine Anzeigevorrichtung (12) und eine die Kommunikationsmittel und die Anzeigevorrichtung steuernde Behälterelektronik (7) aufweist, die mit dem Zentralrechner verbunden ist.

10. Archivierungsvorrichtung nach Anspruch 9, dadurch gekennzeichnet, dass die Behälterelektronik (7) mit Kontakten (9) verbunden ist, welche an der Ablage montierte Schienen berühren, die sowohl zur Lieferung von Energie zum Betrieb der Behälterelektronik als auch zum Informationsaustausch zwischen dem Zentralrechner und der Behälterelektronik dienen.
